# EUROPEAN PATENT APPLICATION

(11) **EP 1 555 185 A1**
(43) Date of publication of application: **20.07.2005**
(21) Application number: 04425013.2
(22) Date of filing: 15.01.2004
(51) Int. Cl.: B61C 7/04, H02J 9/08

(54) **Electrically driven rail vehicle with an emergency power generator and method of powering said vehicle.**

(71) Applicant: Magnetek S.p.A., 52028 Terranuova Bracciolini (Arezzo) (IT); Firema Trasporti S.p.A., 8110 Caserta (IT)
(72) Inventor: Balzano, Giuliano, 08048 Tortoli Nuoro (IT); Martini, David, 52027 San Giovanni Valdarno Arezzo (IT); Della Noce, Guido, 27100 Pavia (IT); Cavalloni, Dario, 20059 Vimercate Milano (IT)
(74) Representative: Mannucci, Michele

(57) **Abstract**

The invention relates to electrically driven rolling stock (3,7), comprising at least one electric motor and a system (9) for receiving electric power from an electrical-supply line (11). Also provided is an emergency generator (13) and a system (49,25,27) of electrical connection between the conversion system (21,23) dedicated to the supply of the motor and the emergency generator (13). The latter suplies power for advance of the rolling stock (3,7) in the event of lack of supply to the rolling stock from said line (11).

## Description

### Technical Field

The present invention relates to improvements in railroad trains and more in general in electric-traction railroad rolling stock. The invention also regards a method for traction of railroad trains or rolling stock in particular conditions of operation.

In the framework of the present description and the attached claims, by the term "rolling stock" is meant any self-propelled railroad means, i.e., a train made up of one or more drawn cars or coaches and/or of one or more locomotives which move along a rail or a system of rails. Said term hence comprises, for example, both a railroad train made up of one or more locomotives and possibly one or more drawn cars or coaches, and a train for metropolitan use, especially on underground lines, made up of one or more traction units. By "traction unit" is in general meant a self-propelled railroad vehicle, made up of one or more passenger cars or coaches and corresponding motor. Typically, said traction units are made up of two vehicles equipped with motors, between which there are arranged one or more drawn coaches, which form independent units that may be combined together to make up a train of greater length.

By "drawn coach" is to be understood, in the present description and in the attached claims, both a passenger coach (either for use over long distances or on metropolitan stretches, possibly on underground line or on overhead lines) and a coach designed for special services, or other purposes.

### State of the Art

Rail transport is currently undergoing a period of great development, both in urban areas, with the construction of metropolitan systems, either totally or in part underground and/or overhead, and in long-distance transport. In the latter case, in particular, there is the tendency to develop railroad trains capable of reaching very high speeds, namely in the region of 300 km/h on a traditional railroad, to provide a means of transport alternative to air transport.

Notwithstanding the solutions adopted for guaranteeing the maximum efficiency of transport, it is not possible to rule out situations of interruption of the electric-power supply on the line. These interruptions can be the consequence of a failure on the line, or else of a general or local interruption of the electric-power supply, or else of a failure of the system for receiving the electrical current with which the railroad train or the rolling stock is equipped.

Whatever the origin of the lack of electric-power supply to the motors of the railroad train or of the rolling stock, the result is the blocking thereof in an undetermined point of the stretch covered. In such conditions, the only energy available is the energy that can be absorbed by the batteries, which is sufficient only for the supply of the emergency lights for a certain amount of time, but is not designed for guaranteeing reasonable conditions of comfort for the passengers. When the lack of electric-power supply occurs in metropolitan-transport systems, there derive there from a considerable inconvenience, in addition to a high risk, for the passengers in the case where the train is blocked in a tunnel. But such drawbacks also exist on long-distance iines, where there are present tunnels in which trains can get blocked. Currently, the train remains blocked in a tunnel until a diesel locomotive arrives or until the power supply is restored on the line.

### Object and Summary of the Invention

An object of the present invention is to propose a system that will be able to overcome or reduce the drawbacks deriving from the interruption of the electric-power supply from the electric line to the motors of the train or in general of the rolling stock, with consequent arrest of the latter. More in particular, one object of the present invention is to identify a system that will enable prevention of long forced stoppages in tunnels and simultaneously guarantee an acceptable minimum comfort for the passengers, until the anomalous conditions cease.

Substantially, according to a first aspect, the invention relates to an electrically driven railroad train or more in general rolling stock, comprising at least one electric motor and a system for receiving electric power from a supply line, on which there is provided at least one emergency generator and a system of electrical connection between the emergency generator and the electric motor or motors of the rolling stock, so that the emergency generator will be able to supply power for advance of the rolling stock in the event of lack of supply from the line. In this way, when the train is blocked, for example, in a tunnel along a railroad, it is possible, via the generation of electric power by the emergency generator, to drive one or more motors of the rolling stock to get it to advance until it comes out of the tunnel in which it is blocked. Another possible emergency situation is represented by the blocking of the train on an underground line between two consecutive stations. In this case, the power supplied by the emergency generator or emergency generators on board the train enables advance of the train itself at least as far as the next station. In both cases, the passengers are relieved from the situation of serious inconvenience and of potential danger represented. by the forced stay in a tunnel.

In general, the emergency generator may comprise an internal-combustion engine, such as a diesel or gasoline engine. More appropriately, it will comprise a turbine engine, which presents considerable advantages in terms of weight and smaller overall dimensions given the same power supplied and the same promptness of starting. The engine drives an electrical generator that supplies the electric power to the electric motor of the train or of the rolling stock. Alternatively, it is also possible to use fuel-cell electric-power generators, with direct conversion of chemical energy into electrical energy. This solution is able to present the advantage of preventing emission of harmful exhaust gases, a circumstance that may prove useful for the prevention of input of combustion gas into the cars precisely when the train is in a tunnel.

In general, the train or rolling stock can comprise one or more electric motors and a variable number of cars and/or locomotives. Also the number of emergency generators may vary from one to a plurality of generators, typically one for each car forming the train. In general, in any case, the power supplied by the emergency generator or emergency generators is equal only to a fraction of the overall rated power of the motor or the motors of the rolling stock. Typically, it is possible to envisage generation via the emergency power generators equal to a percentage ranging from 5% to 30% of the overall rated power of the motor or motors.

The energy generated by the emergency generator or emergency generators can also be used for supplying one or more services on board. In the case of long-distance trains, said services may comprise the system for air-conditioning of the wagons (heating and/or cooling), the lighting system, the system for production of hot water, the restaurant services, and the acoustic-signaling systems, including the loudspeakers for issuing announcements to the passengers. In the case of metropolitan trains, the services on board that must be appropriately guaranteed by the emergency generator or emergency generators are in general exclusively the lighting and acoustic-signaling systems.

The percentage of the rated power of the motors that the emergency generator or emergency generators must guarantee varies according to the type of rolling stock. In fact, in the case of long-distance railroad trains, it is necessary to take into account the need to provide on-board auxiliary services that may even absorb a considerable amount of power (the air-conditioning system, in particular). Moreover, the power available must be sufficient to overcome the starting friction of the train and its inertia, in addition to the possibie siopes that the tine may present. Said slopes may be steeper in the case of long-distance stretches of railroad, whilst they are very modest (but for rare exceptions) in metropolitan stretches. Consequently, on long-distance railroad trains and in particular on high-speed trains, there is normally envisaged a total installed power of the emergency generators higher than what is provided for the rolling stock in use on metropolitan lines. It should however be understood that, since the power supplied by the emergency generators is required for traction only over limited stretches, whenever the conditions in which the train comes to find itself are such as to require more power than the amount provided, for example on account of a particularly steep slope or other unfavorable conditions, the supply to the auxiliary services may also be temporarily reduced or interrupted, to devote the power available to the motors for propulsion of the train. Once the train has come out of a tunnel and stops outside it, the power supplied by the emergency generators is again sent to the auxiliary services on board.

According to a different aspect, the invention relates to a method for the traction of electrically driven railroad rolling stock in the event of lack of voltage on the electric-supply line, characterized by generating power via at least one emergency generator, provided on board said rolling stock, for driving at least one motor of the rolling stock. Advantageously, the emergency generator or emergency generators generate a fraction of the overall rated power of the motor or motors with which the rolling stock is equipped.

Further advantageous characteristics and embodiments of the invention are indicated in the attached claims and will be described in greater detail in what follows with reference to the examples of embodiment.

### Brief Description of the Drawings

A better understanding of the invention will emerge from the ensuing description and the attached drawings, in which non-limiting examples of embodiment of the invention are illustrated schematically. More in particular:
Figure 1 is a schematic representation of a railroad train to which the invention is applied;
Figure 2 is a schematic representation of a traction unit of a metropolitan train;
Figure 3 is a partial electrical diagram of the invention in the application to the railroad train of Figure 1, in a first configuration;
Figure 4 is a partial electrical diagram of the invention in the application to the railroad train of Figure 1, in a second configuration;
Figure 5 is a partial electrical diagram of the invention in the application to the traction unit of Figure 2.

### Detailed Description of the Preferred Embodiments of the Invention

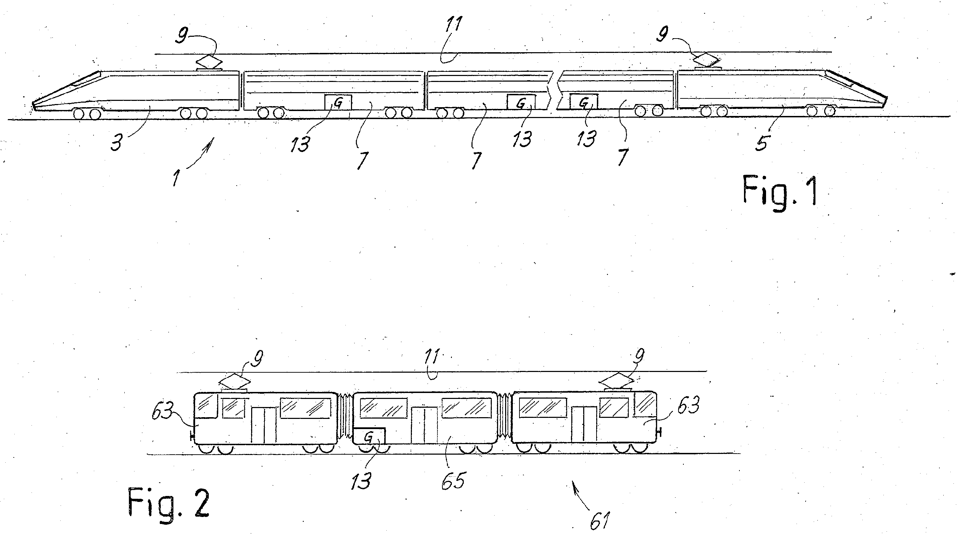

Figure 1 is a schematic illustration of a railroad train 1, made up of a head locomotive and a tail locomotive, both designated by 3, and by a series of coaches, wagons, or cars 7. The locomotives 3 are equipped with pantograph trolleys 9 for taking electric power from a supply line 11. Each locomotive is provided with four axles normally equipped with respective motors, even though this is not binding for the present description. Some or all of the cars or coaches 7 making up the train are equipped with an emergency generator, designated as a whole by 13. The emergency generators 13 can be made up in various ways. For example, they may comprise a fuel-cell battery, which, in the event of necessity, directly transforms chemical energy, supplied by a fuel, into electrical energy. Alternatively, the emergency generator may comprise an electrical generator, typically an alternator, driven by an internal-combustion engine, for example an alternating engine, either a diesel or a gasoline engine. Preferably, however, the engine consists of a gas turbine supplied by liquid fuel.

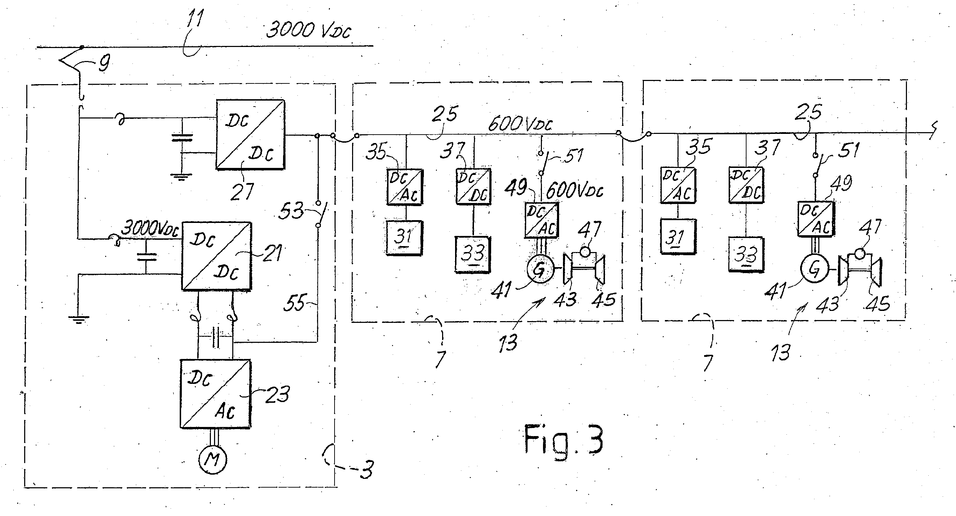

Figure 3 illustrates an electrical diagram of one of the locomotives 3 and of two of the cars 7 that make up the train. The electric power taken from the line 11, via the trolley 9, supplies the motors M of the locomotive. Illustrated in the diagram of Figure 3 is a single block representing one or more motors, it being understood that the number of the motors may vary from type to type of locomotive. As previously mentioned, some locomotives can be equipped with one motor for each truck axle. This occurs, for example, in high-speed railroad trains of the series ETR500, which are in service on Italian Railways. The motors M are supplied according to this diagram through a two-stage converter made up of a DC/DC stage, designated as a whole by 21, which converts the voltage of the contact line 11 (having a rated value of 3000 V) into a d.c. voltage stabilized at 2400 V, and a supply inverter 23, which converts the d.c. voltage into a.c. voltage at a variable frequency for supplying the motors M.

The train is moreover equipped with a "train line" of supply, which traverses all the cars and is designated by 25. This is supplied through one or more DC/DC converters 27, installed on both of the locomotives 3. The train line 25 supplies all the auxiliary services on board the various cars or coaches 7, both when the train is traveling and during stoppages thereof, provided that the trolley 9 is in connection with the supply line 11. Represented schematically in Figure 3 for each car 7 are two generic on-board auxiliary services 31, 33 supplied by respective DC/AC and DC/DC converters, designated by 35 and 37. These services may be of various types and require different types of supply, as schematically represented by the indication of two different types of converters (respectively, DC/DC and DC/AC). For example, the services may comprise the air-conditioning system, the lighting system, the acoustic system for announcements to the passengers, the current outlets available to the passengers, the restaurant-car services, etc.

The emergency generator 13 of each car (or more in general of those cars that are equipped therewith) is connected on the electrical backbone 25. In the diagram of Figure 3, each emergency generator 13 comprises: an alternator 41, driven in rotation by a gas-turbine engine, comprising a turbine 43; a compressor 45; and a combustion chamber 47. The alternator is connected to the train line 25 through an AC/DC converter 49, which converts the a.c. voltage produced by the generator 41 into a 600-V d.c. voltage (in the example). An emergency circuit breaker 51, which is normally open, maintains the respective emergency generator 13 insulated from the train line 25 when the required electric power is supplied by the external supply line 11. The train line 25 can be connected, via a changeover switch 53, to an "intermediate stage" 55 of the inverter 23, through which supply of the motors M is - obtained, for operation of the train under traction in emergency conditions.

When, owing to a failure on the line 11, a generalized black-out, failures of the trolleys 9, or any other reason, the locomotives 3 no longer receive voltage from the line 11, the train 1 stops, and the auxiliary systems 31, 33 are normally supplied (for very short periods of time) by emergency batteries. When the train is equipped with one or more emergency generators 13 according to the invention, instead, these can duly be set at once in operation and, being set in parallel to one another, are connected to the train line 25 via closing of the circuit breakers 51, for supplying the auxiliary services on board the train.

Furthermore, by closing the circuit via the changeover switch 53, the power generated by the generators 13 can be exploited for supplying the motors M of one or both of the locomotives 3. In this way, when the train stops in a point that may entail problems or risks (for example in a tunnel), or else when it stops in the proximity of a station instead of in a station, where the passengers could find greater comfort than in a train that is standing still, by using the power generated by the emergency generators 13 it is possible to move the train on, even at low speed, until it comes out of the tunnel or else reaches the station, or in general reaches a position that may be deemed more convenient.

For this purpose, the total power of the emergency generators 13 does not need to be equal to the overall rated power of the motor or motors installed on the train. For example, if the train is an ETR500, normally in service on Italian Railways, the locomotives of which are each equipped with four 1100-kW motors, for a total installed power of 8800 kW per train, it is found that the use of ten gas turbines having a power of 134 kW each is sufficient to displace the train. The total power supplied by the emergency generators 13 is, in this case, 1340 kW, which is equal to 16.75% approximately of the rated power of the electric motors of the locomotives. Said reduced power is in any case sufficient to overcome the starting friction, to accelerate the train and keep it in motion at a speed of 10 km/h approximately even on slopes of 25‰, which represents a considerable value-for a railroad line, notwithstanding the low value of efficiency of motors operating in the condition of maximum torque, maximum current, and reduced voltage.

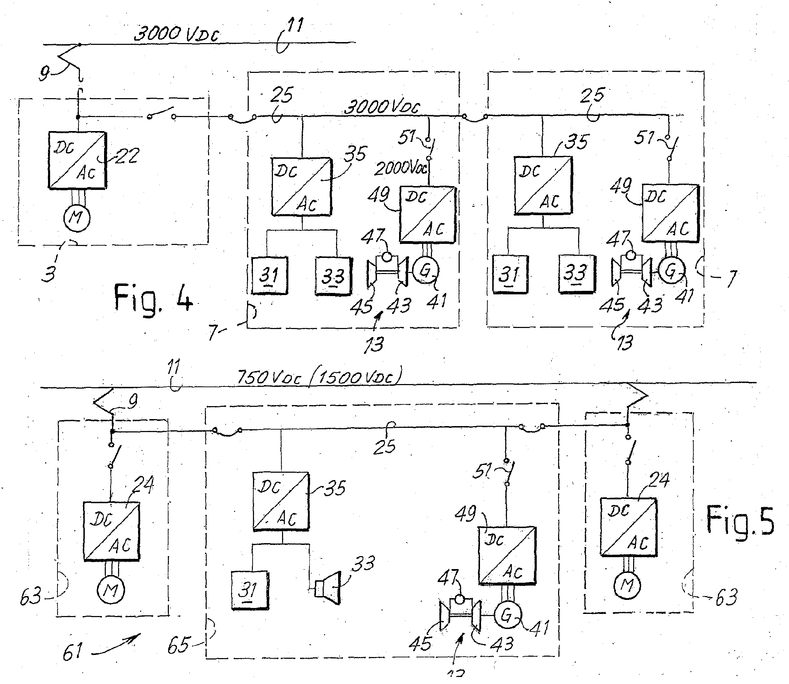

Figure 4 illustrates an electrical diagram of a train of a traditional type operating in a d.c. electrified system. Reference numbers that are the same designate parts that are the same or equivalent to those of the diagram of Figure 3. The locomotive 3 comprises, in this case, one or more motors M supplied by a DC/AC converter stage, designated as a whole by 22. The cars 7 of the train are electrically connected by a "REC" line 25, which receives the supply directly from the trolley 9 of the locomotive. On this line, therefore, there is a voltage equal to the line voltage, typically for example 3000 V_{dc}. Said characteristics of the line voltage can obviously change from country to country.

Each car is equipped with generic auxiliary systems designated by 31 and 33, which - in this schematic example - are supplied by the line 25 via a single DC/AC converter. On the cars 7 (on all or some of them) there are provided generator units 13 composed as described with reference to the diagram of Figure 3 and connected to the line 25 via an AC/DC converter again designated by 49, which transforms the voltage produced by the respective generator 41 to a voltage compatible with the supply of the auxiliary services 31, 33 and with the input to the conversion stage 22, which supplies the motor or the motors M. In the example illustrated, where the rated voltage is 3000 V_{dc}, the converters 49 can be designed for supplying at output a voltage of 2000 V_{dc}, which is sufficient to run the auxiliary services and the motor or motors.

Also in this case, in the absence of voltage through the trolley 9, the auxiliary services of the train and the motor or the motors M are supplied by bringing into operation the emergency generator units 13, the power of which, albeit lower than the rated power of the motors of the train, is still sufficient to move the train on for the desired stretch and to run the on-board auxiliary services.

The inventive idea illustrated in the preceding description with reference to a long-distance railroad train, or in any case for extra-urban services, typically a high-speed train, can be used also for rolling stock designed for use on metropolitan lines, whether underground or surface lines. Normally, metropolitan trains are made up of one or more traction units of the type indicated as a whole in Figure 2. Each traction unit, designated by 61, is made up of two power cars 63 and an intermediate drawn car or coach, designated by 65. The supply line is again designated by 11, and the trolleys, via which the power cars 63 take power for supplying the electric motors and the on-board auxiliary services, are designated by 9. The electric line 11 is typically a 750-V_{dc} or 1500-V_{dc} line.

Also in this case, each power car 63 may present one or more motors, typically an motor for each truck axle and thus, in the example illustrated, four motors for each power car 63. Set on board the drawn car or coach 65 is an emergency generator, once again designated by 13. It may be electrically connected to one or the other or to both of the power cars 63 so as to supply a sufficient number of motors of the traction unit in the event of failure on the line or interruption of the voltage to the network, i.e., in the event of failures of the trolleys 9. The emergency generator 13 will moreover supply the current for powering the essential auxiliary services, such as typically the lighting and the audio system to enable provision of the necessary information to the passengers.

The diagram of Figure 5 shows the electrical connection of the motor or motors M, via a DC/AC converter stage 24, to the trolley 9. The reference number 25 designates the electrical backbone, which connects together the coaches and to which there is connected the DC/AC converter 35 that supplies the auxiliary services 31 and 33. The emergency generator 13, which is represented in an idealized way and is made up of the components 41, 43, 45, and 47 already described previously, can be connected to the line 25 via an AC/DC converter 49 and a changeover switch 51.

Also in the case of the traction unit 61, the power supplied by the generator may be a fraction of the overall rated power of the motors of the unit itself. A power of the order of 10% of the rated power may normally be sufficient, considering also the gentler slopes that normally characterize metropolitan lines.

It is understood that the drawings only show a possible embodiment of the invention, which may vary in its forms and arrangements, without thereby, however, departing from the scope of the underlying idea, as this is defined in the ensuing claims.

## Claims

1. Electrically driven rolling stock, comprising at least one electric motor and a system for receiving electric power from an electrical-supply line, **characterized in that** it comprises at least one emergency generator and a system of electrical connection between said emergency generator and said at least one electric motor, the emergency generator supplying power for the advance of the rolling stock in the event of lack of supply to the rolling stock from said line.

2. The rolling stock as per Claim 1, **characterized in that** associated to said at least one motor is a conversion system dedicated to the supply of the motor and **in that** said electrical connection connects the generator to the conversion system.

3. The rolling stock as per Claim 1 or Claim 2, **characterized in that** said at least one emergency generator is sized for supplying a fraction of the rated power of the motor.

4. The rolling stock as per one or more of Claims 1 to 3, **characterized in that** it comprises a plurality of emergency generators sized in such a way as to supply, altogether, a fraction of the overall rated power of the motor or motors of the rolling stock.

5. The rolling stock as per Claim 3 or Claim 4, **characterized in that** said fraction of the rated power is comprised between 7% and 30%, and preferably between 10% and 20% of the rated power.

6. The rolling stock as per one or more of the preceding claims, **characterized in that** it comprises a traction unit of a metropolitan transport network, equipped with a plurality of electric motors and an emergency generator which, in conditions of lack of supply from said line, supplies at least one of said electric motors of the traction-unit.

7. The rolling stock as per one or more of Claims 1 to 5, **characterized in that** it is made up of a railroad train comprising at least one locomotive with at least one electric motor and a plurality of drawn coaches, and **in that** arranged in some at least of said coaches are respective emergency generators, which can be connected together in parallel for supplying said at least one electric motor of the locomotive.

8. The rolling stock as per one or more of the preceding claims, **characterized in that** said at least one emergency generator is connected also to auxiliary services of the rolling stock for supplying electrically at least a part of said auxiliary services in the event of lack of supply from said line.

9. The rolling stock as per one or more of the preceding claims, **characterized in that** associated to said at least one emergency generator are devices for conversion of the electric power supplied by said emergency generator so as to obtain, at output, an electric current having characteristics compatible with converters of supply of said at least one motor.

10. The rolling stock as per one or more of the preceding claims, **characterized in that** said at least one generator is interfaced to a line for electrification of the rolling stock provided for the supply of the auxiliary systems of the rolling stock itself.

11. The rolling stock as per one or more of the preceding claims, **characterized in that** said motor is supplied by the electrical supply line through a iine converter and an inverter of supply of the motor arranged in succession, and **in that** said at least one emergency generator is connected between the output of the line converter and the inverter.

12. The rolling stock as per one or more of the preceding claims, **characterized in that** said emergency generator comprises a turbine assembly.

13. The rolling stock as per Claim 12, **characterized in that** said turbine is supplied with a liquid fuel.

14. The rolling stock as per one or more of Claims 1 to 9, **characterized in that** said emergency generator comprises fuel cells.

15. A method for traction, in situations of emergency, of a railroad rolling stock comprising at least one electric motor, **characterized by** generating power via at least one emergency generator on board said rolling stock, and by driving said at least one motor via the power generated by said at least one emergency generator.

16. The method as per Claim 15, **characterized in that** said at least one emergency generator generates a fraction of the rated power of said motor or motors.

17. The method as per Claim 15, **characterized by** providing a plurality of emergency generators in parallel, and by powering, via said generators in parallel, said electric motor or motors.

18. The method as per Claim 17, **characterized in that** it generates altogether, via said emergency generators in parallel, a fraction of the rated power of said motor or motors.

19. The method as per one or more of Claims 15 to 18, **characterized in that** the power produced by said generator or generators is comprised between 5% and 30% and preferably between 10% and 20% of the rated power of said motor or motors.

## Amended claims

### Amended claims in accordance with Rule 86(2) EPC.

**1.** Electrically driven rolling stock, comprising: at least one electric motor: a system for receiving electric power from an electrical-supply line; at least one emergency generator and a system of electrical connection between said emergency generator and said at least one electric motor; **characterized in that** said emergency generator(s) is(are) sized for supplying, altogether, only a fraction of the overall rated power of said motor(s), the emergency generator(s) supplying power for the advance of the rolling stock in the event of lack of supply to the rolling stock from said line.

**2.** The rolling stock as per Claim 1, **characterized in that** said fraction of the rated power is comprised between 5% and 30%, and preferably between 10% and 20% of the rated power.

**3.** The rolling stock as per Claim 1 or 2, **characterized in that** associated to said at least one motor is a conversion system dedicated to the supply of the motor and **in that** said electrical connection connects the generator to the conversion system.

**4.** The rolling stock as per one or more of the preceding claims, **characterized in that** it comprises a traction unit of a metropolitan transport network, equipped with a plurality of electric motors and an emergency generator which, in conditions of lack of supply from said line, supplies at least one of said electric motors of the traction unit.

**5.** The rolling stock as per one or more of Claims 1 to 3, **characterized in that** it is made up of a railroad train comprising at least one locomotive with at least one electric motor and a plurality of drawn coaches, and **in that** arranged in some at least of said coaches are respective emergency generators, which can be connected together in parallel for supplying said at least one electric motor of the locomotive.

**6.** The rolling stock as per one or more of the preceding claims, **characterized in that** said at least one emergency generator is connected also to auxiliary services of the rolling stock for supplying electrically at least a part of said auxiliary services in the event of lack of supply from said line.

**7.** The rolling stock as per one or more of the preceding claims, **characterized in that** associated to said at least one emergency generator are devices for conversion of the electric power supplied by said emergency generator so as to obtain, at output, an electric current having characteristics compatible with converters of supply of said at least one motor.

**8.** The rolling stock as per one or more of the preceding claims, **characterized in that** said at least one generator is interfaced to a line for electrification of the rolling stock provided for the supply of the auxiliary systems of the rolling stock itself.

**9.** The rolling stock as per one or more of the preceding claims, **characterized in that** said motor is supplied by the electrical supply line through a line converter and an inverter of supply of the motor arranged in succession, and **in that** said at least one emergency generator is connected between the output of the line converter and the inverter.

**10.** The rolling stock as per one or more of the preceding claims, **characterized in that** said emergency generator comprises a turbine assembly.

**11.** The rolling stock as per Claim 10, **characterized in that** said turbine is supplied with a liquid fuel.

**12.** The rolling stock as per one or more of Claims 1 to 7, **characterized in that** said emergency generator comprises fuel cells.

**13.** A method for traction, in situations of emergency, of a railroad rolling stock comprising at least one electric motor, **characterized by** generating power via at least one emergency generator on board said rolling stock, and by driving said at least one motor via the power generated by said at least one emergency generator, wherein said emergency generator(s) generate(s), altogether, a fraction of the overall rated power of said motor or motors.

**14.** The method as per Claim 13, **characterized by** providing a plurality of emergency generators in parallel, and by powering, via said generators in parallel, said electric motor or motors.

**15.** The method as per Claim 13 or 14, **characterized in that** the power produced by said generator or generators is comprised between 5% and 30% and preferably between 10% and 20% of the rated power of said motor or motors.
